(19) Europäisches Patentamt
European Patent Office
Office européen des brevets

(11) Veröffentlichungsnummer: **0 009 647**
**B1**

(12) **EUROPÄISCHE PATENTSCHRIFT**

(45) Veröffentlichungstag der Patentschrift: **03.03.82**

(51) Int. Cl.³: **C 09 F 1/04,** C 08 G 65/26, B 01 F 17/52

(21) Anmeldenummer: **79103297.2**

(22) Anmeldetag: **05.09.79**

(54) **Nichtionogene Verbindungen auf Basis modifizierter Naturharze, ihre Herstellung und ihre Verwendung als grenzflächenaktive Mittel.**

(30) Priorität: **15.09.78 DE 2840113**
**16.06.79 DE 2924354**

(43) Veröffentlichungstag der Anmeldung:
**16.04.80 Patentblatt 80/8**

(45) Bekanntmachung des Hinweises auf die Patenterteilung:
**03.03.82 Patentblatt 82/9**

(84) Benannte Vertragsstaaten:
**BE CH DE FR GB IT NL**

(56) Entgegenhaltungen:
**DE-A-1 769 331**
**DE-C-570 958**
**DE-C-581 956**
**FR-A-662 603**
**FR-A-1 008 635**
**US-A-2 950 272**

(73) Patentinhaber: **HOECHST AKTIENGESELLSCHAFT, Postfach 80 03 20, D-6230 Frankfurt/Main 80 (DE)**

(72) Erfinder: **Uhrig, Heinz, Feldbergstrasse 59, D-6374 Steinbach/Taunus (DE)**
Erfinder: **Deubel, Reinhold, Dr., Gelerfeld 51, D-6232 Bad Soden am Taunus (DE)**

EP 0 009 647 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Nichtionogene Verbindungen auf Basis modifizierter Naturharze, ihre Herstellung und ihre Verwendung als grenzflächenaktive Mittel

Gegenstand der Erfindung sind Verbindungen der allgemeinen Formel

$$A\text{-}[(X\text{–}O)_n\text{–}H]_m$$

in der A für einen cycloalkyl-, aralkyl- oder arylmodifizierten Naturharzrest oder dessen Veresterungsprodukt mit einem mehrwertigen Alkohol steht,

X für gleiche oder verschiedene Gruppen der Formel

$-CH_2-CH_2-$ und $-CH_2-CH(CH_3)-$ steht,

n eine Zahl von 1 bis 100 ist, und

m eine ganze Zahl von 1 bis 5 bedeutet.

Gegenstand der Erfindung ist auch ein Verfahren zur Herstellung dieser Verbindungen, das dadurch gekennzeichnet ist, dass man Verbindungen der allgemeinen Formel

$$A\text{–}(H)_m$$

mit n·m Mol Äthylenoxid und/oder Propylenoxid umsetzt, wobei A, n und m die vorstehend genannten Bedeutungen haben.

Gegenstand der Erfindung ist weiterhin die Verwendung dieser Verbindungen als grenzflächenaktive Mittel, insbesondere als Dispergiermittel für die Feinverteilung und Stabilisierung von Feststoffen, sowie als Netz-, Emulgier-, Egalisier- und Färbereihilfsmittel.

Der Harzrest A leitet sich vorzugsweise von folgenden Verbindungen ab:

a) modifizierte Harzsäuren und/oder deren Gemische, wie sie durch Reaktion mit aromatischen Hydroxyverbindungen bzw. halogenabspaltenden Cycloalkyl-, vorzugsweise Aryl- oder Aralkyl-Verbindungen aus handelsüblichen Kolophoniumarten oder daraus hergestellten Disproportionierungsprodukten gewonnen werden,

b) Veresterungsprodukte und/oder deren Gemische, wie man sie durch Veresterung aus 1 Mol eines 2- bis 6-wertigen Alkohols mit 1 bis 4, vorzugsweise 1 bis 2 Mol einer nach a) modifizierten Harzsäure und/oder deren Gemischen erhält.

Die Ausgangsmaterialien werden erhalten, indem man Naturharzsäuren oder deren Disproportionierungsprodukte mit aromatischen Hydroxyverbindungen oder mit halogenabspaltenden Cycloalkyl-, vorzugsweise Aralkyl- oder Arylverbindungen nach bekannten Verfahren umsetzt und gegebenenfalls mit mehrwertigen Alkoholen verestert.

Geeignete modifizierte Harze sind Harz-Phenol-Verbindungen, wie sie durch Addition von Phenol, o-, m- oder p-Kresol, o-Kresolacetat, Salicylsäure, Guajacol, Bisphenol A sowie - oder β-Naphthol an natürliche Harzsäuren wie Abietinsäure, Dehydroabietinsäure, Dihydroabietinsäure, Tetrahydroabietinsäure, Levopimarsäure, Dextropimarsäure und Isodextropimarsäure, wie sie in handelsüblichen Kolophoniumarten vorliegen, sowie an disproportionierte, hydrierte und dimerisierte Harzsäuren in Gegenwart von stark sauren oder säureabspaltenden Katalysatoren, wie z.B. Bortrifluorid, Chlorwasserstoff, Zinntetrachlorid, Aluminiumchlorid oder Mineralsäuren bei Temperaturen zwischen 20 und 120 °C in organischen Medium gewonnen werden, wobei auf 1 Mol Harzsäure zweckmässig 0,5 bis 1,0, vorzugsweise 0,7–0,8 Mol der genannten Phenole oder Naphthole eingesetzt wird.

Ausserdem eignen sich modifizierte Naturharzsäuren, wie sie durch Umsetzung von Naturharzsäuren mit halogenabspaltenden Aryl-, Aralkyl- oder Cycloalkylverbindungen, z.B. Benzylchlorid, Bis-(chlormethyl)-benzol, Chlormethyl-toluol, 4-Chlormethyl-diphenyläther, 1-(Chlormethyl)-naphthalin, Benzalchlorid, 2-, 3- oder 4-Chlorphenol, 5-Chlor-2-hydroxytoluol, 2-Chlor-5-hydroxy-1,3-xylol, 4-Chlor-benzylalkohol, 4-Chlor-diphenyl, 4-Chlor-diphenyläther, 1-Chlornaphthalin, 2-Chlornaphthalin, 4-Chlor-1-naphthol, 1-Chlor-2-naphthol, 2-Chlor-1-naphthol und Cyclohexylchlorid in Gegenwart eines Katalysators, wie etwa 0,2% Zinkchlorid bei Temperaturen zwischen 100 bis 220 °C, vorzugsweise 150 bis 210 °C, gewonnen werden, wobei auf 1 Mol Harzsäure zweckmässig 0,5 bis 1,0, vorzugsweise 0,7 bis 0,8 Mol der genannten halogenabspaltenden Verbindungen eingesetzt wird.

Bevorzugte modifizierte Harze enthalten somit, gegebenenfalls über eine Methylengruppe gebunden, Phenyl- oder Naphthylreste, die durch Hydroxy-, niedere Alkyl-, niedere Alkoxy-, Carboxy-, Phenyl- oder Hydroxyalkyl-Gruppen substituiert sein können, wobei die so eingeführten Hydroxy- und Carboxygruppen ebenfalls alkoxyliert werden.

Als Vertreter der mehrwertigen Alkohole zur Veresterung der modifizierten Harzsäuren seien beispielsweise genannt: Glykol, Glyzerin, 1,2,4-Butantriol, Butandiol-(1,4), 1,1,1-Trimethylolpropan, Pentaerythrit, 2,4-Dihydroxy-3-methylolpentan, Hexantriol, Sorbit, Anhydrosorbit, Hexit und Mannit. Die Veresterung der modifizierten Harzsäuren mit den mehrwertigen Alkoholen erfolgt im Molverhältnis 1:1 bis 4:1, vorzugsweise 1:1 bis 2:1, nach bekannten Veresterungsverfahren bei 180 bis 300 °C, vorzugsweise bei 200 bis 270 °C, gegebenenfalls unter Zusatz eines Schleppmittels wie eines aromatischen Kohlenwasserstoffes oder Chlorkohlenwasserstoffes. Als Katalysator können z.B. Benzolsulfonsäure, p-Toluolsulfonsäure, Borsäure, Zinnpulver oder Schwefelsäure verwendet werden.

Die Umsetzung der modifizierten Naturharzsäuren und deren Veresterungsprodukte mit 1,2-Propylenoxid und/oder bevorzugt Äthylenoxid erfolgt nach bekannten Methoden, vorzugsweise

mit Alkalihydroxiden oder -alkoxiden als Katalysator bei 100 bis 200 °C, bevorzugt bei 140 bis 180 °C.

Als Alkalihydroxid eignen sich Kaliumhydroxid oder bevorzugt Natriumhydroxid, als Alkalialkoxid Natriumethylat oder -äthylat. Die Katalysator-Konzentration beträgt 0,05 bis 1,0 Gew.-%, bezogen auf das Ausgangsprodukt. Die Oxalkylierung kann drucklos oder in Druckgefässen mit Propylenoxid oder bevorzugt Äthylenoxid oder Mischungen von beiden durchgeführt werden, wobei das Äthylenoxid gasförmig oder flüssig zugeführt werden kann. Sofern unter Druck gearbeitet wird, beträgt der Arbeitsdruck 1 bis 10, vorzugsweise 2 bis 8 bar Überdruck.

Die Menge Äthylenoxid und/oder Propylenoxid wird so bemessen, dass eine stabile Emulgierbarkeit bzw. eine völlige Löslichkeit der Anlagerungsprodukte in Wasser erreicht wird. Bevorzugt werden an jede freie Carboxy- und Hydroxygruppe der modifizierten Naturharzsäuren bzw. Veresterungsprodukte dieser modifizierten Naturharzsäuren je 1 bis 100, vorzugsweise 8 bis 75 Mol Äthylenoxid und/oder Propylenoxid angelagert. Die Menge des angelagerten Alkylenoxids bemisst sich auch nach dem beabsichtigten Einsatzzweck und damit dem angestrebten Grad der Hydrophilie.

Die durch Anlagerung von Phenolen an Naturharzsäuren erhaltenen Ausgangsprodukte sind bekannt und dienen zur Herstellung von Lacken (DE-PS 536 170, 581 956, 582 846 und 652 602), während die durch Umsetzung von Naturharzsäuren mit halogenabspaltenden Aryl- oder Aralkyl-Verbindungen und anschliessende Veresterung mit Alkoholen erhaltenen Ausgangsprodukte als öllösliche Kunstharze beschrieben werden (DE-PS 570 958).

Es ist weiterhin bekannt, Kolophonium zu oxäthylieren, wobei Wasch-, Emulgier- und Egalisiermittel erhalten werden (Ullmanns Encyklopädie der technischen Chemie, 3. Aufl., Bd. 8, S. 409).

Die erfindungsgemässen Oxalkylierungsprodukte und/oder deren Gemische ergeben in Wasser stabile Emulsionen bzw. sind in Wasser klar löslich, setzen die Oberflächenspannung nach der Ringabreissmethode (DIN 53 914) bis 0,04 N/m herab und sind nach dem Ross-Miles Test (DIN 53 902) nahezu schaumfrei. Sie netzen Baumwollgewebe nach der Tauchnetzmethode (DIN 53 901) innerhalb von 70 bis 180 Sek. und sind gegen starkes Alkali sowie gegen starke Säuren unter üblichen Anwendungsbedingungen der Tenside beständig. Ihre Eigenfarbe ist als wässrige Lösung sehr hell bis praktisch farblos.

Die erfindungsgemässen Verbindungen eignen sich hervorragend als Dispergier-, Netz- und Verteilungsmittel, beispielsweise für Pigmente, ferner für die Formulierung von Pflanzenschutz- und Schädlingsbekämpfungsmitteln sowie als Emulgiermittel für die Herstellung von Carrieremulsionen und als Egalisier- und Färbereihilfsmittel beim Färben und Bedrucken von natürlichem und synthetischem Fasermaterial wie Baumwolle, Wolle, Cellulose, Zellwolle, Celluloseacetat und -triacetat, Polyester, Polyamiden und Polyacrylnitril oder Fasermaterialien, die diese Stoffe enthalten.

Die Vorteile der erfindungsgemässen Substanzen gegenüber bekannten nichtionogenen Verbindungen bestehen darin, dass sie bei deutlich verbessertem Dispergierverhalten im wässrigen Anwendungsbereich trotz guter Netzeigenschaften fast kein Schaumvermögen aufweisen. Die neuen Produkte können auch biologisch leicht abgebaut werden.

Die erfindungsgemässen Verbindungen können allein, als Gemisch oder in Kombination mit anderen nichtionogenen sowie anionaktiven oder kationaktiven Verbindungen, Gerüststoffen und anderen Zusatz- und Hilfsstoffen in Emulgier- und Dispergiermittelformulierungen zur Anwendung kommen.

In den folgenden Beispielen wird die Herstellung der erfindungsgemässen Verbindungen beschrieben. Teile und Prozentangaben beziehen sich auf das Gewicht, Druckangaben auf Überdruck, sofern nichts anderes angegeben ist. Die Säurezahlen (SZ) werden nach DIN 53 185 bestimmt.

Beispiel 1

a) Herstellung der Harz-Phenol-Verbindung

173,8 Tl. einer 25%igen Lösung von Bortrifluorid in Phenol gibt man bei 10 °C innerhalb 4 Stunden zu einer Lösung von 604 Tl. Kolophonium in 800 Tl. Tetrachlormethan und lässt 14 Stunden bei 15 bis 18 °C nachrühren. Zur Entfernung des Katalysators wird das Reaktionsgemisch mit Wasser neutral gewaschen und über wasserfreiem Natriumsulfat getrocknet. Anschliessend wird das Tetrachlormethan durch Destillation entfernt. Man erhält 630 Tl. eines klaren Harzes mit einer Säurezahl von etwa 114 und einem Erweichungspunkt von ca. 105 °C.

b) Herstellung des Harz-Oxalkylates

367 Tl. des unter a) beschriebenen modifizierten Harzes werden nach Zugabe von 1,5 Tl. Natriumhydroxid in einem Druckgefäss unter Rühren und Zuführen von 378,4 Tl. Äthylenoxid bei 150 bis 170 °C unter Aufrechterhaltung eines Druckes zwischen 1,5 und 2,5 bar oxäthyliert. Wenn das ganze Äthylenoxid aufgedrückt ist, wird eine Stunde bei 150 bis 160 °C nachgerührt. Man erhält ein dickflüssiges braunes Harz-Oxäthylat mit 8,6 Mol Äthylenoxid-Gehalt, dessen Trübungspunkt in 25%iger Butyldiglykollösung bei 56,5 °C liegt.

Beispiel 2

367 Tl. des nach Beispiel 1a) hergestellten Harzes werden nach Zugabe von 1,5 Tl. Natriumhydroxid in einem Druckgefäss unter Rühren und Zuführen von 2200 Tl. Äthylenoxid bei 150 bis 170 °C unter Aufrechterhaltung eines Druckes zwischen 1,5 und 2,5 bar oxäthyliert. Wenn das ganze Äthylenoxid aufgedrückt ist, wird eine Stunde bei 150 bis 160 °C nachgerührt. Das erhaltene wachsartige Harz-Oxäthylat ist ockerfarbig und enthält 50 Mol Äthylenoxid. Sein Trübungspunkt in wässriger Lösung liegt bei etwa 60 °C.

Beispiel 3

367 Tl. des nach Beispiel 1a) hergestellten Harzes werden nach Zugabe von 1,5 Tl. Natriumhydroxid in einem Druckgefäss unter Rühren und Zuführen von 3300 Tl. Äthylenoxid bei 150 bis 170 °C unter Aufrechterhaltung eines Druckes zwischen 1,5 und 2,5 bar oxäthyliert. Wenn das ganze Äthylenoxid aufgedrückt ist, wird eine Stunde bei 150 bis 160 °C nachgerührt. Das resultierende Harz-Oxäthylat enthält 75 Mol Äthylenoxid und entspricht in seiner äusseren Form dem Addukt von Beispiel 2. Der Trübungspunkt liegt in einer 25%igen Butyldiglykollösung bei 101 bis 102 °C.

Beispiel 4

a) Herstellung der Harz-Guajacol-Verbindung

264,5 Tl. einer 25%igen Lösung von Bortrifluorid in Guajacol gibt man bei 10 °C innerhalb 4 Stunden zu einer Lösung von 604 Tl. Kolophonium in 800 Tl. Tetrachlormethan und lässt 14 Stunden bei 15 bis 18 °C nachrühren. Nach Aufarbeitung entsprechend Beispiel 1 erhält man 630 Tl. eines klaren Harzes mit einer SZ von etwa 101 und einem Erwp. von ca. 110 °C.

b) Herstellung des Harz-Oxäthylates

367 Tl. des unter a) beschriebenen modifizierten Harzes werden nach Zugabe von 1,5 Tl. Natriumhydroxid in einem Druckgefäss unter Rühren und Zuführen von 2200 Tl. Äthylenoxid bei 150 bis 170 °C unter Aufrechterhaltung eines Druckes zwischen 1,5 und 2,5 bar oxäthyliert. Wenn das ganze Äthylenoxid aufgedrückt ist, wird eine Stunde bei 150 bis 160 °C nachgerührt. Das erhaltene braune Harz-Oxäthylat ist wachsartig und enthält 50 Mol Äthylenoxid. Der Trübungspunkt in wässriger Lösung liegt bei 97 °C.

Beispiel 5

868,5 Tl. des nach Beispiel 4a) hergestellten modifizierten Harzes werden nach Zugabe von 1,5 Tl. Natriumhydroxid in einem Druckgefäss unter Rühren und Zuführen von 3300 Tl. Äthylenoxid bei 150 bis 170 °C unter Aufrechterhaltung eines Druckes zwischen 1,5 und 2,5 bar oxäthyliert. Wenn das ganze Äthylenoxid aufgedrückt ist, wird eine Stunde bei 150 bis 160 °C nachgerührt. Das erhaltene wachsartige Harz-Oxäthylat ist ockerfarbig und enthält 75 Mol Äthylenoxid. Der Trübungspunkt in wässriger Lösung liegt bei 96,5 °C.

Beispiel 6

a) Herstellung der Harz-Salicylsäure-Verbindung

174 Tl. Bortrifluorid-Äthyläther-Komplex gibt man bei 10 °C innerhalb 4 Stunden zu einer Lösung von 604 Tl. Kolophonium und 220,8 Tl. Salicylsäure in 600 Tl. Tetrachlormethan und lässt 14 Stunden bei 15 bis 18 °C nachrühren. Nach Aufarbeitung entsprechend Beispiel 1 erhält man 710 Tl. eines klaren Harzes mit einer SZ von etwa 713 und einem Erweichungspunkt von ca. 115–120 °C.

b) Herstellung des Harz-Oxäthylates

412,4 Tl. des unter a) beschriebenen modifizierten Harzes werden nach Zugabe von 1,5 Tl. Natriumhydroxid in einem Druckgefäss unter Rühren und Zuführen von 1100 Tl. Äthylenoxid bei 150 bis 170 °C unter Aufrechterhaltung eines Druckes zwischen 1,5 und 2,5 bar oxäthyliert. Wenn das ganze Äthylenoxid aufgedrückt ist, wird eine Stunde bei 150 bis 160 °C nachgerührt. Das erhaltene wachsartige braune Harz-Oxäthylat enthält 25 Mol Äthylenoxid und besitzt einen Trübungspunkt in 10%iger Kochsalzlösung von 49,5 °C.

Beispiel 7

a) Herstellung der Harz-Naphthol-Verbindung

106 Tl. Bortrifluorid-Äthyläther-Komplex gibt man bei 10 °C innerhalb 4 Stunden zu einer Lösung von 604 Tl. Kolophonium und 203,2 Tl. β-Napththol in 600 Tl. Tetrachlormethan und lässt 14 Stunden bei 15 bis 18 °C nachrühren. Nach Aufarbeitung entsprechend Beispiel 1 erhält man 726,3 Tl. eines klaren Harzes mit einer SZ von etwa 145 und einem Erweichungspunkt von ca. 115–120 °C.

b) Herstellung des Harz-Oxäthylates

403,6 Tl. des unter a) beschriebenen modifizierten Harzes werden nach Zugabe von 3,0 Tl. Natriumethylat in einem Druckgefäss unter Rühren und Zuführen von 2200 Tl. Äthylenoxid bei 160 bis 180 °C unter Aufrechterhaltung eines Druckes zwischen 2 bis 8 bar oxäthyliert. Die Nachrührzeit bei 150 bis 160 °C beträgt 1 Stunde. Das erhaltene wachsartige gelbbraune Harz-Oxäthylat enthält 50 Mol Äthylenoxid bei einem Trübungspunkt in 25%iger Butyldiglykollösung von 95,5 °C.

Beispiel 8

a) Herstellung der Harz-Phenol-Verbindung

173,8 Tl. einer 25%igen Lösung von Bortrifluorid in Phenol gibt man bei 10 °C innerhalb 4 Stunden zu einer Lösung von 604 Tl. Kolophonium in 800 Tl. Tetrachlormethan und lässt 14 Stunden bei 15 bis 18 °C nachrühren. Nach Aufarbeitung entsprechend Beispiel 1 erhält man ca. 630 Tl. eines klaren Harzes mit einer SZ von 114 und einem Erweichungspunkt von etwa 105 °C.

b) Herstellung des Harz-Phenol-Glyzerinesters

367 Tl. der unter a) beschriebenen Harz-Phenol-Verbindung werden in Gegenwart von 5 Tl. Zinnpulver mit 92 Tl. Glyzerin in einem Rührgefäss unter Abdestillieren des Reaktionswassers innerhalb von 8 bis 10 Stunden bei 230 bis 250 °C bei gleichzeitigem Durchleiten von Stickstoff bis zu einer SZ von etwa 25 verestert.

c) Herstellung des Harz-Phenol-Glyzerinester-Oxäthylates

438 Tl. des unter b) beschriebenen Harz-Phenol-Glyzerinesters werden nach Zugabe von 3,3 Tl. Natriumethylat in einem Druckgefäss unter Rühren und Zuführen von 440 Tl. Äthylenoxid bei 150 bis 160 °C unter Aufrechterhaltung eines Druckes zwischen 2 bis 3 bar oxäthyliert. Wenn das ganze Äthylenoxid aufgedrückt ist, wird 1 Stunde bei 150 bis 160 °C nachgerührt. Man erhält ein dickflüssiges, braunes Harz-Glyzerinester-Oxäthylat mit 10 Mol Äthylenoxid und einem Trübungspunkt in 25%iger Butyldiglykollösung von 56,5 °C.

Beispiel 9

a) Herstellung der Harz-Kresol-Verbindung

200 Tl. einer 25%igen Lösung von Bortrifluorid in techn. Kresol gibt man bei 10 °C innerhalb 4 Stunden zu einer Lösung von 604 Tl. Kolophonium in 800 Tl. Tetrachlormethan und lässt 14 Stunden bei 15 bis 18 °C nachrühren. Nach Aufarbeitung entsprechend Beispiel 1 erhält man 767 Tl. eines klaren Harzes mit einer SZ von 117 und einem Erweichungspunkt von 105 bis 110 °C.

b) Herstellung des Harz-Kresol-Glyzerinesters

377 Tl. der unter a) beschriebenen Harz-Kresol-Verbindung werden in Gegenwart von 5 Tl. Zinnpulver mit 92 Tl. Glyzerin in einem Rührgefäss unter Abdestillieren des Reaktionswassers innerhalb von 8 bis 10 Stunden bei 230 bis 250 °C bei gleichzeitigem Durchleiten von Stickstoff bis zu einer SZ von etwa 25 verestert.

c) Herstellung des Harz-Kresol-Glyzerinester-Oxäthylates

451 Tl. des unter b) beschriebenen Harz-Kresol-Glyzerinesters werden nach Zugabe von 3,3 Tl. Natriummethylat mit 440 Tl. Äthylenoxid oxäthyliert. Das erhaltene braune Harzesteraddukt ist dickflüssig und enthält 10 Mol Äthylenoxid. Der Trübungspunkt in 25%iger Butyldiglykollösung liegt bei 60 °C.

Beispiel 10

a) Herstellung der Harz-Phenol-Verbindung

173,8 Tl. einer 25%igen Lösung von Bortrifluorid in Phenol gibt man bei 10 °C innerhalb 4 Stunden zu einer Lösung von 604 Tl. disproportioniertem Kolophonium in 800 Tl. Tetrachlormethan und lässt 14 Stunden bei 15 bis 18 °C nachrühren. Nach Aufarbeitung entsprechend Beispiel 1 erhält man 625 Tl. eines klaren Harzes mit einer SZ von 111 und einem Erweichungspunkt von ca. 90–100 °C.

b) Herstellung des Harz-Phenol-Glyzerinesters

367 Tl. der unter a) beschriebenen Harz-Phenol-Verbindung werden in Gegenwart von 5 Tl. Zinnpulver mit 92 Tl. Glyzerin in einem Rührgefäss unter Abdestillieren des Reaktionswassers innerhalb von 8 bis 10 Stunden bei 230 bis 250 °C bei gleichzeitigem Durchleiten von Stickstoff bis zu einer SZ von etwa 25 verestert.

c) Herstellung des Harz-Phenol-Glyzerinester-Oxäthylates

438 Tl. des unter b) beschriebenen Harz-Phenol-Glyzerinesters werden nach Zugabe von 3,3 Tl. Natriumhydroxid in einem Druckgefäss unter Rühren und Zuführen von 550 Tl. Äthylenoxid bei 150 bis 170 °C unter Aufrechterhaltung eines Druckes zwischen 1,5 und 2,5 bar oxäthyliert. Wenn das ganze Äthylenoxid aufgedrückt ist, wird eine Stunde bei 150 bis 160 °C nachgerührt. Das erhaltene Harz-Oxäthylat ist dickflüssig, braun und enthält 12,5 Mol Äthylenoxid. Sein Trübungspunkt in 25%iger Butyldiglykollösung liegt bei 60 °C.

Beispiel 11

a) Herstellung der Harz-Naphthol-Verbindung

106 Tl. Bortrifluorid-Äthyläther-Komplex gibt man bei 10 °C innerhalb 4 Stunden zu einer Lösung von 604 Tl. Kolophonium und 203,2 Tl. β-Naphthol in 600 Tl. Tetrachlormethan und lässt 14 Stunden bei 15 bis 18 °C nachrühren. Nach Aufarbeitung entsprechend Beispiel 1 erhält man 726,3 Tl. eines klaren Harzes mit einer SZ von 144,5 und einem Erweichungspunkt von ca. 115–120 °C.

b) Herstellung des Harz-Naphthol-Glyzerinesters

403,6 Tl. des unter a) beschriebenen modifizierten Harzes werden in Gegenwart von 5,3 Tl. Zinnpulver mit 92 Tl. Glyzerin in einem Rührgefäss unter Abdestillieren des Reaktionswassers innerhalb von 8 bis 10 Stunden bei 230 bis 250 °C bei gleichzeitigem Durchleiten von Stickstoff bis zu einer SZ von ca. 25 verestert.

c) Herstellung des Harz-Naphthol-Glyzerinester-Oxäthylates

477 Tl. des unter b) beschriebenen Harz-Naphthol-Glycerinesters werden nach Zugabe von 3,4 Tl. Natriummethylat in einem Druckgefäss unter Rühren und Zuführen von 660 Tl. Äthylenoxid bei 150 bis 160 °C unter Aufrechterhaltung eines Druckes zwischen 2 bis 8 bar oxäthyliert. Wenn das ganze Äthylenoxid aufgedrückt ist, wird eine Stunde bei 150 bis 160 °C nachgerührt. Das erhaltene Harzsäureglyzerinesteraddukt enthält 15 Mol Äthylenoxid. Es ist dickflüssig, braun und der Trübungspunkt in 25%iger Butyldiglykollösung liegt bei 58 °C.

Beispiel 12

a) Herstellung der Harz-Guajacol-Verbindung

264,5 Tl. einer 25%iger Lösung von Bortrifluorid in Guajacol gibt man bei 10 °C innerhalb 4 Stunden zu einer Lösung von 604 Tl. Kolophonium in 800 Tl. Tetrachlormethan und lässt 14 Stunden bei 15 bis 18 °C nachrühren. Nach Aufarbeitung entsprechend Beispiel 1 erhält man 630 Tl. eines klaren Harzes mit einer SZ von etwa 101 und einem Erweichungspunkt von ca. 110 °C.

b) Herstellung des Harzsäure-Glyzerinesters

403,6 Tl. des unter a) beschriebenen modifizierten Harzes werden in Gegenwart von 5,3 Tl. Zinnpulver mit 92 Tl. Glyzerin in einem Rührgefäss unter Abdestillieren des Reaktionswassers innerhalb von 8 bis 10 Stunden bei 230 bis 250 °C bei gleichzeitigem Durchleiten von Stickstoff bis zu einer SZ von ca. 25 verestert.

c) Herstellung des Harzsäure-Glyzerinester-Oxäthylates

477 Tl. des unter b) beschriebenen Harzsäureglyzerinesters werden nach Zugabe von 3,4 Tl. Natriummethylat in einem Druckgefäss unter Rühren und Zuführen von 660 Tl. Äthylenoxid bei 150 bis 160 °C unter Aufrechterhaltung eines Druckes von zunächst zwischen 2 und 8 bar und anschliessend 1,3–3 bar oxalkyliert. Wenn das ganze Äthylenoxid aufgedrückt ist, wird eine Stunde bei 150 bis 160 °C nachgerührt. Das erhaltene Harzsäureglyzerinesteraddukt ist dickflüssig, braun und enthält 15 Mol Äthylenoxid. Der Trübungspunkt in 25%iger Butyldiglykollösung beträgt 63,5 °C.

Beispiel 13

477 Tl. des nach Beispiel 12b) hergestellten

Harzsäure-Glyzerinesters werden entsprechend Beispiel 12c) mit 3300 Tl. Äthylenoxid umgesetzt. Das erhaltene gelbbraune Harzsäure-Monoglyzerinester-Addukt ist wachsartig und enthält 75 Mol Äthylenoxid. Sein Trübungspunkt in 25%iger Butyldiglykollösung liegt bei 101 bis 102 °C.

Beispiel 14

a) Herstellung des Benzyl-Harz-Glyzerinesters

302 Tl. Kolophonium werden in 126,5 Tl. Benzylchorid nach Zugabe von 0,4 Tl. Zinkchlorid unter Durchleiten von Stickstoff langsam auf 100 °C erhitzt und 2 Stunden bei dieser Temperatur gehalten. Sowie die Chlorwasserstoffentwicklung nachlässt, wird die Temperatur auf 200 °C erhöht und etwa 1 Stunde bei 200 bis 210 °C gehalten, bis das Umsetzungsprodukt praktisch halogenfrei ist. Nach Abkühlen auf etwa 100 °C und Zugabe von 92 Tl. Glyzerin und 130 Tl. Xylol wird zum Sieden unter Rückfluss erhitzt und das Reaktionswasser durch azeotrope Destillation in einem Wasserabscheider gesammelt. Nach 4 Stunden ist die Umsetzung beendet und die flüchtigen Bestandteile werden durch Vakuumdestillation oder am Rotationsverdampfer entfernt. Als Rückstand erhält man ein helles Harz mit der SZ 30 und einem Erweichungspunkt von 120 bis 125 °C.

b) Herstellung des Harz-Oxäthylates

465 Tl. des unter a) beschriebenen Benzyl-Harz-Glyzerinesters werden nach Zugabe von 3,4 Tl. Natriummethylat mit 600 Tl. Äthylenoxid oxäthyliert. Das erhaltene dickflüssige Harzglyzerinaddukt ist braun und enthält 13,6 Mol Äthylenoxid. Der Trübungspunkt in 25%iger Butyldiglykollösung beträgt 58,5 °C.

Beispiel 15

465 Tl. des nach Beispiel 14a) hergestellten Benzyl-Harz-Glyzerinesters werden nach Zugabe von 3,4 Tl. Natriummethylat mit 1496 Tl. Äthylenoxid umgesetzt. Das erhaltene Harz-Oxäthylat enthält 34 Mol Äthylenoxid. Es ist wachsartig braun und sein Trübungspunkt in 10%iger Kochsalzlösung liegt bei 61,5 °C.

Beispiel 16

465 Tl. des nach Beispiel 14a) hergestellten Benzyl-Harz-Glyzerinesters werden nach Zugabe von 3,4 Tl. Natriummethylat mit 2706 Tl. Äthylenoxid umgesetzt. Das erhaltene Harz-Oxäthylat enthält 61,5 Mol Äthylenoxid. Die äussere Form entspricht dem Produkt von Beispiel 15 und sein Trübungspunkt in 10%iger Kochsalzlösung beträgt 56,5 °C.

Beispiel 17

a) Herstellung des Harz-Phenol-Glyzerinesters

302 Tl. Kolophonium werden mit 128 Tl. 4-Chlorphenol nach Zugabe von 0,4 Tl. Zinkchlorid unter Durchleiten von Stickstoff langsam auf 100 °C erhitzt und 2 Stunden bei dieser Temperatur gehalten. Sowie die Chlorwasserstoffentwicklung nachlässt, wird die Temperatur auf 200 °C erhöht und etwa 1 Stunde bei 200 bis 210 °C gehalten, bis das Umsetzungsprodukt praktisch halogenfrei ist. Nach Abkühlen auf 100 °C und Zugabe von 92 Tl. Glyzerin und 130 Tl. Xylol wird zum Sieden unter Rückfluss erhitzt und das Reaktionswasser durch azeotrope Destillation in einem Wasserabscheider gesammelt. Nach etwa 4 Stunden ist die Umsetzung beendet und die flüchtigen Bestandteile werden durch Vakuumdestillation oder am Rotationsverdampfer entfernt. Als Rückstand erhält man ein helles Harz mit einer SZ von 25 und einem Erweichungspunkt von 120 bis 125 °C.

b) Herstellung des Harz-Oxäthylates

468,5 Tl. des unter a) beschriebenen Harz-Phenol-Glyzerinesters werden unter Zugabe von 2,4 Tl. Natriumhydroxid in einem Druckgefäss unter Rühren und Zuführung von 616 Tl. Äthylenoxid bei 140 bis 150 °C unter Aufrechterhaltung eines Druckes zwischen 2,5 bis 3,5 bar oxalkyliert. Wenn das ganze Äthylenoxid aufgedrückt ist, wird 1 Stunde bei 140 bis 150 °C nachgerührt. Das erhaltene dickflüssige Harzglyzerinaddukt ist rotbraun und enthält 14 Mol Äthylenoxid. Der Trübungspunkt in 25%iger Butyldiglykollösung liegt bei 60 °C.

Beispiel 18

a) Herstellung der Harz-Phenol-Verbindung

302 Tl. Kolophonium werden mit 128 Tl. 4-Chlorphenol nach Zugabe von 0,4 Tl. Zinkchlorid unter Durchleiten von Stickstoff langsam auf 100 °C erhitzt und 2 Stunden bei dieser Temperatur gehalten. Anschliessend wird die Temperatur auf 200 bis 210 °C erhöht, bis nach etwa einer Stunde das Umsetzungsprodukt halogenfrei ist. Nach dem Abkühlen erhält man ein helles Harz mit einem Erweichungspunkt von etwa 105 °C.

b) Herstellung des Harz-Oxäthylates

393,5 Tl. der unter a) beschriebenen Harz-Phenol-Verbindung werden entsprechend Beispiel 17b) nach Zugabe von 2,1 Tl. Natriumhydroxid bei 140 bis 150 °C oxäthyliert. Das erhaltene leichtviskose Harz-Phenol-Addukt ist olivgrün und enthält 12 Mol Äthylenoxid. Der Trübungspunkt in Butyldiglykol beträgt 50,5 °C.

Beispiel 19

a) Herstellung des Harz-Kresol-Glyzerinesters

302 Tl. Kolophonium werden gemäss Beispiel 17 a) mit 114 Tl. 5-Chlor-2-hydroxytoluol in Gegenwart von 0,4 Tl. Zinkchlorid kondensiert und anschliessend mit 92 Tl. Glyzerin verestert. Als Rückstand erhält man ein helles Harz mit einer SZ von 24 und einem Erweichungspunkt von 110 bis 115 °C.

b) Herstellung des Harz-Oxäthylates

478 Tl. des unter a) beschriebenen Harz-Kresol-Glyzerinesters werden nach Zugabe von 2,5 Tl. Natriumhydroxid entsprechend Beispiel 17b) mit 660 Tl. Äthylenoxid umgesetzt. Das erhaltene dickflüssige Harzglyzerinaddukt enthält 15 Mol Äthylenoxid. Der Trübungspunkt in 25%iger Butyldiglykollösung liegt bei 60 °C.

Beispiel 20

a) Herstellung des Harz-Naphthol-Glyzerinesters

302 Tl. Kolophonium werden mit 489,4 Tl. 4-Chlor-1-naphthol nach Zugabe von 0,4 Tl. Zinkchlorid gemäss Beispiel 17a) kondensiert und mit 92 Tl. Glyzerin verestert. Nach Entfernung der flüchtigen Bestandteile erhält man ein braunes Harz mit der SZ 29 und einem Erweichungspunkt von 115 bis 125 °C.

b) Herstellung des Harz-Oxäthylates

489 Tl. des unter a) beschriebenen Harz-Naphthol-Glyzerinesters werden nach Zugabe von 2,5 Tl. Natriumhydroxid entsprechend Beispiel 17b) mit 772 Tl. Äthylenoxid umgesetzt. Das erhaltene dickflüssige Harzglyzerinaddukt ist rotbraun und enthält 18 Mol Äthylenoxid. Der Trübungspunkt in 25%iger Butyldiglykollösung beträgt 59 °C.

In der nachstehenden Tabelle werden die oberflächenaktiven Eigenschaften nach folgenden DIN-Normen angegeben:

| | | | |
|---|---|---|---|
| Netzkraft: | DIN 53 901, | Schaumvermögen: | DIN 53 902 |
| Oberflächenspannung: | DIN 53 914 | und Jodfarbzahl: | DIN 6162 |

Die Beurteilung des Schaumvermögens wurde nach der Einteilung

0 nicht,
1 schwach,
2 schwach–mittel,
3 mittel und
4 stark schäumend

vorgenommen.

Tabelle

| Verb. nach Beispiel | Netzkraft (sec.) 20 °C | 70 °C | Schaumvermögen C=2 g/l | Oberflächenspannung ($10^{-3}$ N/m) C=2 g/l | Jodfarbzahl C=2 g/l |
|---|---|---|---|---|---|
| 1 | >300 | 116 | 1 | 40,5 | 2 |
| 2 | >300 | 86 | 1 | 43,5 | 1 |
| 3 | >300 | 91 | 1 | 42,5 | 1 |
| 4 | 290 | 77 | 1 | 41,5 | 1 |
| 5 | >300 | 78 | 1 | 41,6 | 1 |
| 6 | >300 | 93 | 1 | 44,4 | 1 |
| 7 | >300 | 93 | 1 | 43,7 | 1 |
| 8 | >300 | 93 | 1 | 43,7 | 2 |
| 9 | >300 | 227 | 1 | 42,5 | 1 |
| 10 | 188 | 73 | 1 | 40,0 | 1 |
| 11 | >300 | 114 | 1 | 43,8 | 1–2 |
| 12 | 142 | 67 | 1 | 41,4 | 2 |
| 13 | >300 | 131 | 1 | 40,9 | 1 |
| 14 | >300 | 143 | 1 | 43,6 | 1 |
| 15 | >300 | 145 | 1 | 44,4 | 1 |
| 16 | >300 | 140 | 1 | 42,3 | 1 |
| 17 | 147 | 92 | 1 | 40,2 | 1 |
| 18 | 178 | 78 | 1 | 39,8 | 1 |
| 19 | 148 | 91 | 1 | 42,8 | 1 |
| 20 | 300 | 134 | 1 | 39,3 | 20 |

**Patentansprüche**

1. Verbindung der Formel

$$A[(X–O)_n–H]_m$$

in der A für einen cycloalkyl-, aralkyl- oder arylmodifizierten Naturharzrest oder dessen Veresterungsprodukt mit einem mehrwertigen Alkohol steht,

X für gleiche oder verschiedene Gruppen der Formel

$$–CH_2–CH_2– \text{ und } –CH_2–CH(CH_3)– \text{ steht,}$$

n eine Zahl von 1 bis 100 ist und

m eine ganze Zahl von 1 bis 5 bedeutet.

2. Verbindungen nach Anspruch 1, worin A für den Rest einer natürlichen Harzsäure steht, die mit einer halogenabspaltenden Aryl- oder Aralkylverbindung oder einer phenolischen Verbindung umgesetzt wurde.

3. Verbindungen nach Anspruch 1, wobei A für ein Veresterungsprodukt mit einem 2- bis 6-wertigen Alkohol steht.

4. Verfahren zur Herstellung der Verbindungen nach Anspruch 1, dadurch gekennzeichnet, dass man eine Verbindung der allgemeinen Formel

$$A-(H)_m$$

in der A und m die in Anspruch 1 genannten Bedeutungen haben, mit n.m Mol Äthylenoxid und/oder Propylenoxid umsetzt, wobei n die in Anspruch 1 genannte Bedeutung hat.

5. Verwendung der Verbindungen nach Anspruch 1 als grenzflächenaktive Mittel.

6. Verwendung der Verbindungen nach Anspruch 1 als Dispergier-, Netz-, Emulgier- und Färbereihilfsmittel.

**Revendications**

1. Composés répondant à la formule:

$$A[(X-O)_n-H]_m$$

dans laquelle A représente un radical de résine naturelle modifié par un radical cycloalkyle, aralkyle ou aryle, ou son produit d'estérification par un polyol, les

X représentent des radicaux, identiques ou différents, de formules:

$$-CH_2-CH_2- \text{ et } -CH_2-CH(CH_3)-$$

n désigne un nombre de 1 à 100, et

m désigne un nombre entier de 1 à 5.

2. Composés selon la revendication 1 dans lesquels A représente le radical d'un acide résinique naturel que l'on a fait réagir avec un composé arylique ou aralkylique capable de donner un halogène ou avec un composé phénolique.

3. Composés selon la revendication 1 dans lesquels A représente un produit d'estérification avec un alcool comportant de 2 à 6 groupes hydroxy alcooliques.

4. Procédé de préparation des composés selon la revendication 1, procédé caractérisé en ce qu'on fait réagir un composé répondant à la formule générale:

$$A-(H)_m$$

dans laquelle A et m ont les significations données à la revendication 1, avec n.m moles d'oxyde d'éthylène et/ou d'oxyde de propylène, n ayant la signification donnée à la revendication 1.

5. Application des composés selon la revendication 1 comme produits surfactifs.

6. Application des composés selon la revendication 1 comme dispersants, mouillants, émulsionnants et adjuvants de teinturerie.

**Claims**

1. Compounds of the formula

$$A[(X-O)_n-H]_m$$

wherein A is a cycloalkyl-, aralkyl- or aryl-modified radical of a natural resinic acid or of an esterification product thereof with a polyhydric alcohol,

X stands for the same or different groups of the formulae

$$-CH_2-CH_2- \text{ and } -CH_2-CH(CH_3)-,$$

n is a number of from 1 to 100 and

m is an integer of from 1 to 5.

2. Compounds according to claim 1, wherein A stands for the residue of a natural resinic acid which has been reacted with an aryl or aralkyl compound capable of splitting off halogen or with a phenolic compound.

3. Compounds according to claim 1, wherein A stands for an esterification product with a di- to hexahydric alcohol.

4. Process for the preparation of the compounds according to claim 1, characterized by reacting a compound of the general formula

$$A-(H)_m$$

wherein A and m have the meanings given in claim 1, with n.m mols of ethylene oxide and/or propylene oxide, wherein n has the meaning given in claim 1.

5. Use of the compounds according to claim 1 as interphase active agents.

6. Use of the compounds according to claim 1 as dispersing, wetting, emulsifying and dyeing agents.